# EUROPEAN PATENT APPLICATION

(11) **EP 4 418 802 A1**
(43) Date of publication of application: **21.08.2024**
(21) Application number: 24150171.7
(22) Date of filing: 03.01.2024
(51) Int. Cl.: H04W 74/0838, H04L 5/00, H04W 56/00, H04W 36/00, H04W 74/00

(54) **METHODS AND DEVICES FOR BEAM MAINTENANCE**

(30) Priority: 17.02.2023 FI 20235197
(71) Applicant: Nokia Technologies Oy, 02610 Espoo (FI)
(72) Inventor: HAKOLA, Sami-Jukka, Kempele (FI); KOSKELA, Timo, Oulu (FI); KARJALAINEN, Juha Pekka, Sotkamo (FI)
(74) Representative: Nokia EPO representatives

(57) **Abstract**

Embodiments of the present disclosure relate to methods and apparatus for beam maintenance in a radio access network, in particular, through random access preamble transmission for beam maintenance. A terminal device receives, from a network device, a resource configuration for contention-free random access. The resource configuration indicates a plurality of CFRA resources each associated with a respective synchronization signal and physical broadcast channel block index or channel state information reference signal index. The plurality of CFRA resources are applicable for timing advance acquiring in a target network device. The terminal device transmits, to the target network device, one or more CFRA physical random access channels based on the resource configuration. In this way, beam maintenance may be performed based on an SSB index or CSI-RS index associated with one of the transmitted CFRA PRACH(s) before a cell switch command or a random access response.

## Description

### CROSS-REFERENCE TO RELATED APPLICATION

This application claims priority from, and the benefit of, Finland Application No. 20235197, filed on February 17, 2023, the contents of which are hereby incorporated by reference in its entirety.

### FIELD

Various example embodiments relate to the field of telecommunication and in particular, to methods, devices, apparatuses and a computer readable storage medium for beam maintenance in a radio access network, in particular, through random access preamble transmission for beam maintenance.

### BACKGROUND

With the development of communication technologies, a multiple-downlink control information (multi-DCI) for multiple transmission reception points (multi-TRP) operation was already proposed for wireless communication systems. Currently, two timing advance (TA) values may be supported in uplink (UL) multi-DCI for multi-TRP operation. Timing advance management is required to maintain the UL timing advance alignment.

In wireless communication systems, a random access (RA) procedure may be triggered for various purposes such as requesting resources for radio resource control (RRC) connection, uplink synchronization, e.g., timing alignment, and etc. Conventionally, a network may trigger user equipment (UE) to transmit a dedicated contention-free random access (CFRA) preamble on a physical random access channel (PRACH) to the network for TA maintenance.

For the CFRA preamble transmission, the UE has certain synchronization signal and physical broadcast channel block (SSB) or channel state information reference signal (CSI-RS), based on which a transmit beam is formed. The UE needs to keep tracking that SSB or CSI-RS in order to maintain beams, or a beam pair link associated to the transmitted CFRA preamble. The UE would use the beam pair link to monitor downlink transmissions from the network. However, current beam maintenance solution does not work well all the time, especially in some scenarios such as UE mobility, network decisions, etc. Thus, further investigation of random access preamble transmission for beam maintenance is needed.

### SUMMARY

In general, example embodiments of the present disclosure provide a solution for configuring one or more CFRA PRACH transmissions for beam maintenance.

In a first aspect, there is provided a terminal device. The terminal device comprises one or more transceivers; and one or more processors coupled to the one or more transceivers, wherein the one or more transceivers are configured with the one or more processors to cause the terminal device to: receive, from a network device, a resource configuration for a contention-free random access, CFRA, wherein the resource configuration indicates a plurality of CFRA resources each associated with a respective synchronization signal and physical broadcast channel block, SSB, index or channel state information reference signal, CSI-RS, index, and the plurality of CFRA resources are applicable for timing advance, TA, acquiring in a target network device; and transmit, to the target network device, one or more CFRA physical random access channels, PRACHs, based on the resource configuration.

In a second aspect, there is provided a network device. The network device comprises one or more transceivers; and one or more processors coupled to the one or more transceivers, wherein the one or more transceivers are configured with the one or more processors to cause the network device to: transmit, to a terminal device, a resource configuration for a contention-free random access, CFRA, wherein the resource configuration indicates a plurality of CFRA resources each associated with a respective synchronization signal and physical broadcast channel block, SSB, index or channel state information reference signal, CSI-RS, index, and the plurality of CFRA resources are applicable for timing advance, TA, acquiring in a target network device.

In a third aspect, there is provided a method at a terminal device. The method comprises receiving, from a network device, a resource configuration for a contention-free random access, CFRA, wherein the resource configuration indicates a plurality of CFRA resources each associated with a respective synchronization signal and physical broadcast channel block, SSB, index or channel state information reference signal, CSI-RS, index, and the plurality of CFRA resources are applicable for timing advance, TA, acquiring in a target network device; and transmitting, to the target network device, one or more CFRA physical random access channels, PRACHs, based on the resource configuration.

In a fourth aspect, there is provided a method at a network device. The method comprises: transmitting, to a terminal device, a resource configuration for a contention-free random access, CFRA, wherein the resource configuration indicates a plurality of CFRA resources each associated with a respective synchronization signal and physical broadcast channel block, SSB, index or channel state information reference signal, CSI-RS, index, and the plurality of CFRA resources are applicable for timing advance, TA, acquiring in a target network device.

In a fifth aspect, there is provided an apparatus for a terminal device. The apparatus comprises: means for receiving, from a network device, a resource configuration for a contention-free random access, CFRA, wherein the resource configuration indicates a plurality of CFRA resources each associated with a respective synchronization signal and physical broadcast channel block, SSB, index or channel state information reference signal, CSI-RS, index, and the plurality of CFRA resources are applicable for timing advance, TA, acquiring in a target network device; and means for transmitting, to the target network device, one or more CFRA physical random access channels, PRACHs, based on the resource configuration.

In a sixth aspect, there is provided an apparatus for a network device. The apparatus comprises: means for transmitting, to a terminal device, a resource configuration for a contention-free random access, CFRA, wherein the resource configuration indicates a plurality of CFRA resources each associated with a respective synchronization signal and physical broadcast channel block, SSB, index or channel state information reference signal, CSI-RS, index, and the plurality of CFRA resources are applicable for timing advance, TA, acquiring in a target network device.

In a seventh aspect, there is provided a terminal device. The terminal device comprises at least one processor; and at least one memory including computer program codes, wherein the at least one memory and the computer program codes are configured to, with the at least one processor, cause the terminal device to: receive, from a network device, a resource configuration for a contention-free random access, CFRA, wherein the resource configuration indicates a plurality of CFRA resources each associated with a respective synchronization signal and physical broadcast channel block, SSB, index or channel state information reference signal, CSI-RS, index, and the plurality of CFRA resources are applicable for timing advance, TA, acquiring in a target network device; and transmit, to the target network device, one or more CFRA physical random access channels, PRACHs, based on the resource configuration.

In an eighth aspect, there is provided a network device. The network device comprises at least one processor; and at least one memory including computer program codes, wherein the at least one memory and the computer program codes are configured to, with the at least one processor, cause the network device to: transmit, to a terminal device, a resource configuration for a contention-free random access, CFRA, wherein the resource configuration indicates a plurality of CFRA resources each associated with a respective synchronization signal and physical broadcast channel block, SSB, index or channel state information reference signal, CSI-RS, index, and the plurality of CFRA resources are applicable for timing advance, TA, acquiring in a target network device.

In a ninth aspect, there is provided a non-transitory computer readable medium comprising program instructions for causing an apparatus to perform at least the method according to any one of the above third to fourth aspect.

In a tenth aspect, there is provided a computer program comprising instructions, which, when executed by an apparatus, cause the apparatus at least to: receive, by a terminal device and from a network device, a resource configuration for a contention-free random access, CFRA, wherein the resource configuration indicates a plurality of CFRA resources each associated with a respective synchronization signal and physical broadcast channel block, SSB, index or channel state information reference signal, CSI-RS, index, and the plurality of CFRA resources are applicable for timing advance, TA, acquiring in a target network device; and transmit, to the target network device, one or more CFRA physical random access channels, PRACHs, based on the resource configuration.

In an eleventh aspect, there is provided a computer program comprising instructions, which, when executed by an apparatus, cause the apparatus at least to: transmit, by a network device and to a terminal device, a resource configuration for a contention-free random access, CFRA, wherein the resource configuration indicates a plurality of CFRA resources each associated with a respective synchronization signal and physical broadcast channel block, SSB, index or channel state information reference signal, CSI-RS, index, and the plurality of CFRA resources are applicable for timing advance, TA, acquiring in a target network device.

In a twelfth aspect, there is provided a terminal device. The terminal device comprises: receiving circuitry configured to receive, from a network device, a resource configuration for a contention-free random access, CFRA, wherein the resource configuration indicates a plurality of CFRA resources each associated with a respective synchronization signal and physical broadcast channel block, SSB, index or channel state information reference signal, CSI-RS, index, and the plurality of CFRA resources are applicable for timing advance, TA, acquiring in a target network device; and transmitting circuitry configured to transmit, to the target network device, one or more CFRA physical random access channels, PRACHs, based on the resource configuration.

In a thirteenth aspect, there is provided a network device. The network device comprises: transmitting circuitry configured to transmit, to a terminal device, a resource configuration for a contention-free random access, CFRA, wherein the resource configuration indicates a plurality of CFRA resources each associated with a respective synchronization signal and physical broadcast channel block, SSB, index or channel state information reference signal, CSI-RS, index, and the plurality of CFRA resources are applicable for timing advance, TA, acquiring in a target network device.

In a fourteenth aspect, there is provided an apparatus. The apparatus comprises means for: receiving, by a terminal device and from a network device, a resource configuration for a contention-free random access, CFRA, wherein the resource configuration indicates a plurality of CFRA resources each associated with a respective synchronization signal and physical broadcast channel block, SSB, index or channel state information reference signal, CSI-RS, index, and the plurality of CFRA resources are applicable for timing advance, TA, acquiring in a target network device; and transmitting, to the target network device, one or more CFRA physical random access channels, PRACHs, based on the resource configuration.

In a fifteenth aspect, there is provided an apparatus. The apparatus comprises means for: transmitting, by a network device and to a terminal device, a resource configuration for a contention-free random access, CFRA, wherein the resource configuration indicates a plurality of CFRA resources each associated with a respective synchronization signal and physical broadcast channel block, SSB, index or channel state information reference signal, CSI-RS, index, and the plurality of CFRA resources are applicable for timing advance, TA, acquiring in a target network device.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
Fig. 1 illustrates an example communication network in which embodiments of the present disclosure may be implemented;
Fig. 2 illustrates an example of a process for beam maintenance according to an embodiment of the present disclosure;
Fig. 3 illustrates another example of a process for beam maintenance according to some embodiments of the present disclosure;
Fig. 4 illustrates an example flowchart of a method implemented at a terminal device according to some embodiments of the present disclosure;
Fig. 5 illustrates an example flowchart of a method implemented at a network device according to some embodiments of the present disclosure;
Fig. 6 illustrates an example simplified block diagram of an apparatus that is suitable for implementing embodiments of the present disclosure; and
FIG. 7 illustrates a block diagram of an example computer readable medium in accordance with some embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as long term evolution (LTE), LTE-advanced (LTE-A), wideband code division multiple access (WCDMA), high-speed packet access (HSPA), narrow band Internet of Things (NB-IoT) and so on. Furthermore, the communications between a terminal device and a network device in the communication network may be performed according to any suitable generation communication protocols, including, but not limited to, the third generation (3G), the fourth generation (4G), 4.5G, the fifth generation (5G), or the further sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a remote radio Unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a subscriber station (SS), a portable subscriber station, a mobile station (MS), or an access terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an internet of things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

As used herein, the term "transmission reception point (TRP)" refers to a transmission reception point having an antenna array (with one or more antenna elements) at the network side located at a specific geographical location, which may be used for transmitting and receiving signals to/from the terminal device. In embodiment of the present disclosure, a TRP may refer to macro cell, micro cell, an RRH, a relay, a femto node, a pico node, etc. Although some embodiments of the present disclosure are described with reference to two TRPs for example, these embodiments are only for the purpose of illustration and help those skilled in the art to understand and implement the present disclosure, without suggesting any limitations as to the scope of the present disclosure.

It is to be understood that the present disclosure described herein can be implemented in various manners other than the ones described below.

In Rel-18, it has been agreed that a random access response (RAR) may be not needed or whether the RAR is needed may be configured at least in certain use cases. For example, regarding whether the RAR is needed for a physical downlink control channel (PDCCH) ordered random access channel (RACH) for a candidate cell in Layer 1/Layer 2 (L1/L2) triggered inter-cell mobility (LTM), the following alternatives are considered for further study:
·Alterative 1: RAR is needed
·Alterative 2: RAR is not needed
   - Note: If alterative 2 is supported, a TA value of candidate cell is indicated in cell switch command
·Alterative 3: whether RAR is needed can be configured.

In the alternative 2 or 3, i.e., when the RAR is not needed or the RAR reception is configurable, the TA value and other uplink synchronization information such as beam information based on the random access procedure (such as contention-free random access (CFRA) based on a PDCCH order) may be provided upon triggering a cell switch command.

Conventionally, the reception of the RAR is associated with the preamble transmission, i.e. if the RAR is not provided by the network or the terminal device does not receive it, the terminal device may be configured to retransmit the RACH preamble. In alternative 2 or 3, on the contrary, information (such as a TA value) supposed to be carried by the RAR from the target cell may be alternatively provided in the handover/cell switch command, and thus the TA maintenance would need to be carried out in efficient manner during the time between the (initial) CFRA transmission and the cell switch command.

In an option, the network may trigger the terminal device to transmit or retransmit a CFRA for TA maintenance and beam maintenance, and it would need a dedicated scheduling of the DCI trigger PDCCH order every time TA is to be updated, which may cause an increased signaling overhead and reducing scheduling flexibility.

Meanwhile, in the CFRA process, the UE may also assume that a beam pair link associated to the transmitted CFRA preamble is established with the network, and the UE would use the beam pair link to monitor downlink transmissions from the network. Particularly, for the PRACH preamble transmission, the UE has a certain synchronization signal and physical broadcast channel block (SSB) or a channel state information reference signal (CSI-RS) based on which it forms the transmit beam. The UE needs to keep tracking that SSB or CSI-RS in order to maintain the beam pair link.

In a multi-TRP scenario or LTM scenario, the UE may switch or handover between a serving cell and a target cell or another candidate cell due to reasons such as mobility. Specifically, the serving cell may trigger a CFRA process for a target cell by a PDCCH order which provides the UE with a dedicated CFRA preamble and information on beam pair link such as an SSB index. The UE may transmit the CFRA preamble to the target cell and the target cell may measure the transmission of the CFRA preamble and backhaul to the serving cell with beam and timing information for the UE. Then the serving cell may determine to handover the UE to the target cell and then transmit a cell switch command containing TA information to the UE to indicate the UE to switch from the serving cell to the target cell.

Conventionally, after the transmission of the CFRA preamble, the UE may start to monitor an RAR and use, if necessary, beams indicated by the RAR for the subsequent transmissions to the target cell. The UE may also assume that the network would use the beam that received the CFRA preamble for the subsequent transmissions. However, the inventors notice that in the above alternative 2 or 3, the RAR may be not needed, and thus the UE may only use the initial beam pair link for the subsequent uplink transmissions and downlink reception.

In such case, the initial beam pair link between the UE and the target cell may become not good enough due to some reasons such us UE mobility. Especially, a time period between the PRACH transmission and reception of the cell switch command may be relatively longer than a conventional time period between the PRACH transmission and reception of an RAR in the normal RACH procedure. This is due to involvement of, for example, the core network signaling between the TRPs and cells and scheduling decisions at the serving cell, and thus the beam pair link may be not suitable for the subsequent transmissions between the target cell and the UE.

Therefore, there is a need to enhance current beam maintenance solution, especially for the CFRA process in for timing advance, TA, acquiring in the target cell.

To this end, according to embodiments of the present disclosure, there is provided a solution for configuring a CFRA PRACH transmission for beam maintenance. In this solution, a terminal device receives, from a (source or serving) network device (or cell), a resource configuration for contention-free random access, CFRA. The resource configuration indicates a plurality of CFRA resources each associated with a respective synchronization signal and physical broadcast channel block, SSB, index or channel state information reference signal, CSI-RS, index. The plurality of CFRA resources are applicable for timing advance, TA, acquiring in a target network device (or target cell). The terminal device transmits, to the target network device, one or more CFRA physical random access channels, PRACHs, based on the resource configuration. The solution may be especially applicable in beam maintenance for example in a scenario of multi-TRP or in a scenario of lower layer triggered mobility (LTM). The acquired TA of the target network device (or target cell) may be transmitted to the terminal device via the (source) network device. The acquired TA of the target network device may be transmitted to the terminal device via the target network device. The terminal device may transmit a second CFRA PRACH when a new SSB is detected. The new SSB is different from the one on which a first CFRA PRACH is transmitted.

In this way, a plurality of CFRA resources are configured for a CFRA process and the terminal device has a possibility to select another beam for subsequent transmission/reception before reception of a cell switch or handover command. Particularly, a beam maintenance and TA maintain between the terminal device and the target network device may be performed based on the plurality of SSB indices or CSI-RS indices associated with the transmitted CFRAPRACH(s) before a cell switch command, and without dedicated scheduling of the DCI containing a PDCCH order triggering a CFRA PRACH.

Principle and embodiments of the present disclosure will be described in detail below with reference to the accompanying drawings. However, it is to be noted that these embodiments are illustrated as examples and not intended to limit scope of the present application in any way.

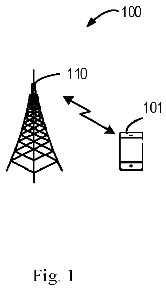

Reference is first made to Fig. 1, which illustrates an example communication network 100 in which embodiments of the present disclosure can be implemented. As illustrated in Fig. 1, the communication network 100 includes a network device (e.g. a base station) 110 and a terminal device (e.g. a user equipment) 101 served by the network device 110. The terminal device 101 can communicate with the network device 110 via one or more physical communication channels or links.

In the communication network 100, a link from the terminal device 101 to the network device 110 is referred to as a UL, while a link from the network device 110 to the terminal device 101 is referred to as a downlink (DL). The UL and DL can be collectively referred to as beam pair link. In UL, the terminal device 101 is a TX device (or a transmitter) and the network device 110 is a RX device (or a receiver). In DL, the network device 110 is a transmitting (TX) device (or a transmitter) and the terminal device 101 is a receiving (RX) device (or a receiver).

It is to be understood that the numbers of network devices and terminal devices are only for the purpose of illustration without suggesting any limitations to the present disclosure. The communication network 100 may include any suitable number of BSs, UEs and/or TRPs adapted for implementing implementations of the present disclosure.

It should be noted that the network device 110 in the present disclosure may be control unit (CU) of a gNB, or it may be distributed unit (DU) of the gNB, or it may be gNB. The network device 110 may also be a TRP part of a gNB. The present disclosure has not restriction of the implementation of the network device.

Communications in the communication system 100 may be implemented according to any proper communication protocol(s), comprising, but not limited to, the third generation (3G), the fourth generation (4G) and the fifth generation (5G) or beyond, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: code division multiple access (CDMA), frequency division multiple access (FDMA), time division multiple access (TDMA), frequency division duplex (FDD), time division duplex (TDD), multiple-input multiple-output (MIMO), orthogonal frequency division multiple (OFDM), discrete Fourier transform spread OFDM (DFT-s-OFDM) and/or any other technologies currently known or to be developed in the future.

In the communication network 100, the terminal device 101 receives, from the network device 110, a resource configuration for a contention-free random access, CFRA. The resource configuration indicates a plurality of CFRA resources each associated with a respective SSB index or CSI-RS index, and the plurality of CFRA resources are applicable for TA acquiring in a target network device (a target cell). The terminal device 101 transmits, to the target network device (target cell), one or more CFRAPRACHs, based on the resource configuration. The target network device may be co-located with the network device 110. Alternatively, the target network device may be a different network device than the network device 110.

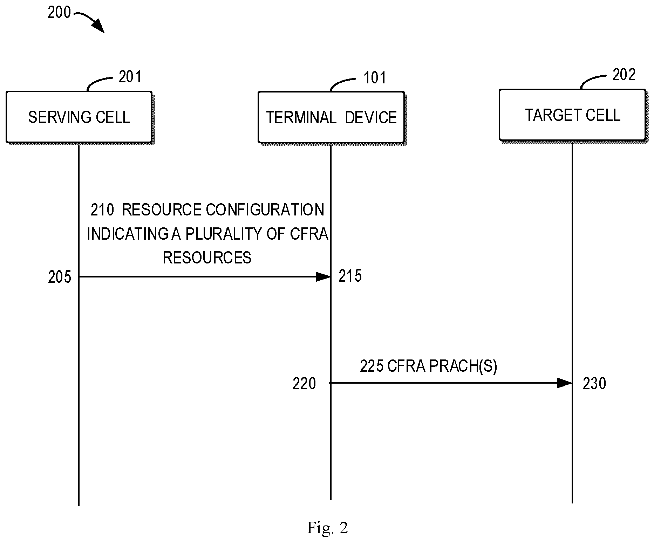

Reference is now made to Fig. 2, which shows an example of a process 200 for beam maintenance according to an embodiment of the present disclosure. For the purpose of discussion, the process 200 will be described with reference to Fig. 1. The terminal device 101, a serving cell 201 and a target cell 202 may be involved in the process 200.

In embodiments of the present disclosure, the serving cell 201 and the target cell 202 are two different cells but may be co-located. e.g., the target cell 202 shares a same base station with the network device 110. The serving cell 201 and the target cell 202 may also locate in different base stations. For example, the serving cell 201 may be provided by the network device 110 and the target cell 202 may be provide by another network device (not illustrated).

In a multi-TRP scenario, the serving cell 201 may be provided by a first TRP or first set of TRPs and the target cell 202 may be provided by a second TRP or a second set of TRPs. The first TRP (or first set of TRPs) and the second TRP (or a second set of TRPs) may be located in the same base station, or alternatively, located in different base stations.

As discussed above, in the multi-TRP scenario or the LTM scenario, the terminal device 101 may be switched or handover from the serving cell 201 to the target cell 202 for e.g., better transmission quality.

As illustrated in Fig. 2, the serving cell 201 (e.g., the network device 110) transmits 205 a resource configuration 210 for CFRA to the terminal device 101. The resource configuration 210 indicates a plurality of CFRA resources each associated with a respective SSB index or CSI-RS index.

As used herein, the term "CFRA resource" may refer to a certain CFRA preamble in a certain random access occasion (RO). The plurality of CFRA resources may be applicable for TA acquisition in a target cell. The target cell is provided by a target network device. The target network device may be the same network device (co-location) providing the serving cell 201; or alternatively, the target network device may be a network device providing the target cell 202 and it is different from the network device 110. In other word, the plurality of CFRA resources may be used before a handover/cell switch command is received from the serving cell 201, or a second CFRA resource in the plurality of CFRA resources may be used for TA acquiring after a timer expiry of a first CFRA resource in the plurality of CFRA resources has been send. The transmission of CFRA PRACH in the target cell is for TA acquiring purpose. More than one CFRA resource is configured considering the SSB associated with the CFRA resource may change during the TA acquiring process.

For example, a CFRA preamble may be specific to the terminal device 101 and be transmitted to the target cell 202 (e.g., target TRP(s)) for TA acquisition. The target cell 202 may identify the terminal device 101 based on the dedicated CFRA preamble and determine a TA value for the terminal device 101 based on the transmission of the CFRA preamble.

As used herein, the term "SSB index" may refer to an index of SSB, transmitted by the serving cell in the PDCCH order together with the CFRA resource and it may be associated to a certain SSB (transmit) beam. The term "CSI-RS index may refer to an index of a CSI-RS resources or resource set, transmitted by the serving cell in the PDCCH order together with CFRA resource, and it may be associated to a certain CSI-RS (transmit) beam as well. A CFRA resource may be associated with an SSB index or a CSI-RS index . A plurality of CFRA resource may be associated with a plurality of SSB indices or CSI-RS indices.

The terminal device 101 may understand the transmit and receive beams for the transmission of a CFRA PRACH based on the SSB index or CSI-RS index associated with the CFRA resource for the CFRA PRACH transmission. The terminal device 101 may also consider that a beam pair link based on the SSB index or CSI-RS index associated with the CFRA resource may be used for subsequent transmissions with the network, for example a subsequent transmission of CFRA, monitoring DL signals from the target cell, etc.

In some embodiments, the plurality of CFRA resources may be valid before reception of a cell switch command or a handover command. The terminal device 101 may receive the cell switch (handover) command which indicates a switch or handover to the target cell 202. In this case, the terminal device 101 may obtain the uplink synchronization information from the cell switch command and may stop transmitting CFRA PRACHs using the plurality of CFRA resources for TA maintenance. In some other cases, the cell switch command may indicate a switch from the serving cell 201 to a different cell than the target cell 202. In this case, it is unnecessary to use the plurality of CFRA resources for TA acquisition in the target cell 202 anymore and thus the plurality of CFRA resources may become invalid too.

Alternatively, the plurality of CFRA resources may be valid before expiry of a first timer (also referred to as a validity timer) for a valid period of the plurality of CFRA resources. For example, the terminal device 101 may start the first timer upon reception of the plurality of CRFA resources or a first transmission of a CFRA PRACH. In other words, the first timer may be configured for a valid period for the plurality of CFRA resources. While the first timer is running, the terminal device 101 may consider the CFRA resource has been used for PRACH as still valid. Generally, the timer may be set to a value longer than reception of the cell switch command or even reception of a PDCCH from the target cell.

In some embodiments, the serving cell 201 may transmit 205 the resource configuration 210 in a PDCCH order triggering a CFRA process. The PDCCH order may trigger a CFRA process using a CFRA resource of the plurality of CFRA resources. Alternatively, the PDCCH order may indicate the plurality of CFRA resources for TA acquiring in a target network device, while triggering a CFRA process using a different CFRA resource than the plurality of CFRA resources for another candidate cell at the same time.

At the terminal side, the terminal device 101 receives 215 the resource configuration 210. The terminal device 101 then transmits 220, to the target cell 202, one or more CFRA PRACHs 225 based on the resource configuration 210. The target cell 202 receives 230 the one or more CFRA PRACHs 225.

In some embodiments, the terminal device 101 may transmit 220 a single CFRA PRACH based on one of the plurality of CFRA resources indicated by the resource configuration 210. Alternatively, the terminal device 101 may transmit 220 more than one CFRA PRACHs based on corresponding CFRA resources of the plurality of CFRA resources indicated by the resource configuration 210. In some embodiments, the terminal device 10 1 may transmit 220 the plurality of CFRA PRACHs based on a predefined transmission interval for e.g., reducing load to the network.

In some embodiments, the terminal device 101 may measure the SSB index or CSI-RS index corresponding to a first CFRA resource for a first CFRA RACH, or may additionally measure one or more SSB indices or CSI-RS indices. When a quality of an SSB index or a CSI-RS index associated with the first CFRA resource is lower than a first predetermined value the terminal device 101 may perform a selection of a second CFRA resource from the plurality of CFRA resources for a second transmission of a CFRA PRACH and transmit a second CFRA PRACH.

In other words, the terminal device 101 may transmit two or more CFRA PRACHs using different CFRA resources when the quality of an SSB index or a CSI-RS index associated with the first CFRA resource becomes not good.

As discussed above, each CFRA resource may be associated with a respective SSB index or CSI-RS index. In this way, after each transmission of the CFRA PRACH, the terminal device 101 may consider that the target cell 202 may use the beam associated with the SSB index or CSI-RS index (used in the current or last CFRA PRACH transmission) for subsequent transmissions with the terminal device 101. The terminal device 101 may also consider to use the beam associated with the SSB index or CSI-RS index for subsequent transmissions or receptions with the network device 110.

In other words, the SSB index or CSI-RS index may be considered as applicable quasi co-location (QCL) source. Based on this QCL source assumption, the terminal device 101 may monitor a PDCCH or a PDSCH from the target cell 202 with the SSB index or the CSI-RS index associated with the current or last CFRAPRACH transmission. For example, when the terminal device 101 selects second CFRA resource for a second transmission of CFRAPRACH, the terminal device 101 may monitor, with an SSB index or a CSI-RS index associated with the second CFRA resource, a PDCCH or a PDSCH from a target cell 202.

In some embodiments, the terminal device 101 may start to use the SSB index or CSI-RS index associated with the second CFRA resource for monitoring a PDCCH or a PDSCH from a target cell 202 after a predefined time period following the transmission of the second CRFA PRACH. In other words, there may be a configured or predefined time period until a new SSB or CSI-RS index is considered as an applicable QCL source for the UE to monitor the PDCCH and/or PDSCH from the target cell 202 (if the terminal device 101 is indicated to switch to the target cell 202). The terminal device 101 may wait for the configured or predefined time elapsed before it considers the new SSB or CSI-RS index as an applicable QCL source.

In some embodiments, the wait time above may be configured or determined by taking a reception and processing delay of the receiving TRP/cell and inter-cell signaling between receiving TRP/cell and serving TRP/cell into account.

In some embodiments, the terminal device 101 may use a second timer (also referred to as a wait timer) for timing the wait time above (the configured or predetermined time) and the new SSB or CSI-RS index can be considered as an applicable QCL source for monitoring only upon expiry of the second timer.

For example, the terminal device 101 may start the second timer upon each transmission of a CFRA PRACH using a new CFRA resource corresponding to a new SSB or CSI-RS index. When the terminal device 101 is indicated, e.g., by a cell switch command, to switch to the target cell 202, the old or former SSB index or CSI-RS index may still be considered as an applicable QCL source for monitoring while the second timer is running. When the second timer stops, the terminal device 101 may use the new (i.e., current or last) SSB index or CSI-RS index for monitoring a PDCCH or PDSCH from the target cell 202.

In some embodiments, a first CFRA resource of a first CFRA PRACH may be selected from the plurality of CFRA resources by the terminal device at its will, for example randomly or using a certain rule. For example, it may select the first or last one in a list of CFRA resources.

In some embodiments, a first CFRA resource of a first CFRA PRACH may be determined or indicated, or configured by the serving cell 201 without requiring the UE's selection. For example, the plurality of CFRA resources may comprise a first (initial) CFRA resource and one or more additional CFRA resources. The first (initial) CFRA resource may be configured for an initial CFRA PRACH and the initial CFRA PRACH may be triggered by a PDCCH order indicating the resource configuration 210. In this case, the terminal device 101 may transmit an initial CFRA PRACH using the first CFRA resource first and then select another CFRA resource from the plurality of CFRA resource for a subsequent CFRA PRACH transmission.

In some embodiments, the terminal device 101 may determine that an SSB index or a CSI-RS index associated with the first CFRA resource has a first quality that is lower than a first predetermined value and may determine to select another CFRA resource from the additional CFRA resources. The terminal device 101 may select a second CFRA resource which associated with an SSB index or CSI-RS index having a better quality than the first quality of the SSB index or CSI-RS index associated with the first CFRA resource. The first predetermined value may be configured by the network device.

Based on the selection, the terminal device 101 may transmit a second CFRA PRACH using the second CFRA resource. Additionally, the terminal device 101 may consider that the target cell 202 would transmit, to the terminal device 101, a PDCCH or a PDSCH with a QCL assumption associated with as an SSB index or a CSI-RS index associated with the second CFRA resource.

In some embodiments, the terminal device 101 may measure qualities of the SSB indices or CSI-RS indices associated with the plurality of CFRA resources. The quality of the SSB indices or CSI-RS indices may indicate a quality of a beam pair link established based on the corresponding SSB index or CSI-RS index. The terminal device 101 may select a CFRA resource from the plurality of CFRA resources or the one or more additional CFRA resources based on the measuring.

For example, the terminal device 101 may perform SSB measurement or RSRP measurement for measuring the qualities of the SSB indices or CSI-RS indices. The terminal device 101 may measure the qualities of the SSB indices or CSI-RS indices based on the RSRP measurement against a certain threshold or some hypothetical block error rate (BLER) of the PDCCH according to the SSB measurement.

If the terminal device 101 determines that a second quality of the SSB index or CSI-RS index associated with a second CFRA resource is higher than the first quality of the SSB index or CSI-RS index associated with the first CFRA resource, the terminal device 101 may determine to use the second CFRA resource to perform a second CFRA PRACH.

Alternatively or additionally, if the terminal device 101 determines that a second quality of the SSB index or CSI-RS index associated with a second CFRA resource is above a second predetermined value, the terminal device 101 may determine to use the second CFRA resource to perform a second CFRAPRACH. Accordingly, a QCL assumption based on the SSB index or CSI-RS index associated with the second CFRA resource may be made. The second predetermined value may be configured by the network device. The second predetermined value may be the same as the first predetermined value.

In other words, the terminal device 101 may select a new CFRA resource if beam associated with the new CFRA resource has a quality above a predetermined vale and/or if it has a higher quality than a formerly-used CFRA resource. The terminal device 101 may select a new CFRA resource with the highest quality among the plurality of CFRA resources. On the other hand, if none of beams associated with the other SSB indices or CSI-RS indices has a quality higher than the beam associated with the formerly-used CFRA resource or the second predetermined value, the terminal device may remain to use the SSB index or CSI-RS index associated with the formerly-used CFRA resource.

In some embodiments, the terminal device 101 may transmit an indication of a failure in beam maintenance to the serving cell 201 based on determining that the SSB indices or CSI-RS indices associated with the plurality of CFRA resources all have qualities lower than a predetermined value. Alternatively, the terminal device 101 may transmit the indication of a failure in beam maintenance based on determining that one or more additional CFRA resources have qualities lower than the predetermined value or lower than the first quality associated to the first CFRA resource.

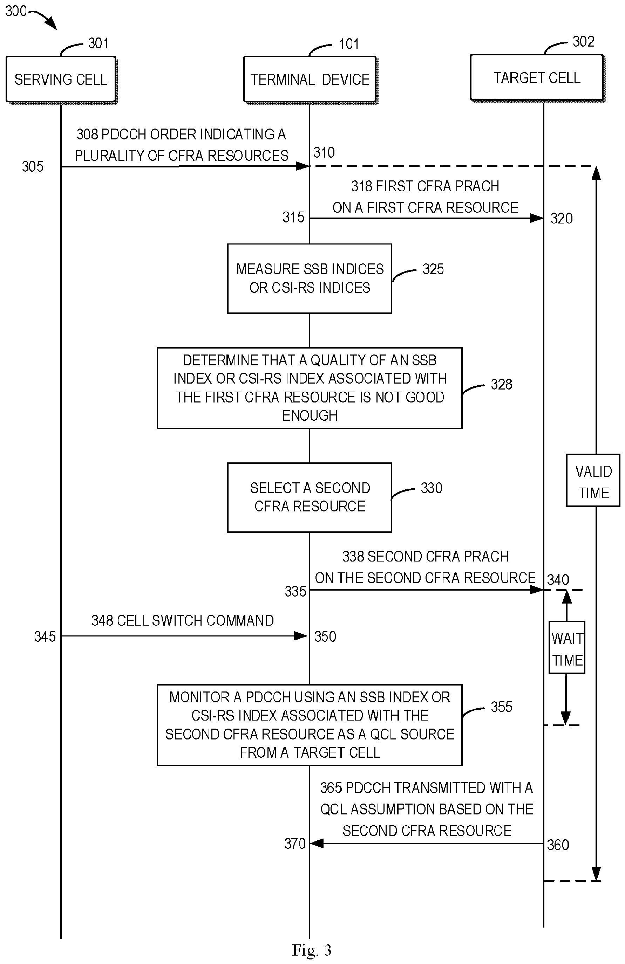

Fig. 3 illustrates another example of a process 300 for beam maintenance according to some embodiments of the present disclosure. It is noted that the process 300 can be deemed as a more specific example of the process 200. It would be appreciated that the process 300 may be applied to the communication network 100 of FIG. 1 and any other similar communication scenarios.

For the purpose of discussion, the process 300 will be described with reference to Fig. 1. The terminal device 101, a serving cell 301 and a target cell 302 may be involved in the process 300. Similarly, the serving cell 301 and target cell 302 may be provided by the same network device or different network devices.

As illustrated in Fig. 3, the serving cell 301 may transmit 305 a PDCCH order 308 triggering a CFRA PRACH. The PDCCH order may contain a resource configuration indicating a plurality of CFRAresources each associated with an SSB index or CSI-RS index.

In some embodiments, the plurality of CFRA resources and associated SSB indexes and CSI-RS index may be contained in the PDCCH order. In some embodiments, the mapping of CFRA resources to SSB indices and CSI-RS indices may be configured by the network device in a different message and the PDCCH order only indicates triggering of CFRAPRACH transmission (to the target cell). However, based on the configured mapping, the terminal device 101 may learn the SSB indices and/or CSI-RS indices associated with the plurality of CFRA resources as indicted in the PDCCH order.

The plurality of CFRA resources may be used for CFRA PRACH transmissions to the target cell 302 for uplink synchronization, e.g., TA maintenance.

It is to be noted that, even though not illustrated in the process 300, the terminal device 101 may provide its capability to support lower layer triggered mobility (LTM) to the network. The terminal device 101 may measure configured SSB indices or CSI-RS indices of the target cell 302 and provide mobility measurement report to the network. Based on the measurement report, the serving cell 301 may provide a plurality of CFRA resources for the terminal device 101 for CFRAPRACH transmissions to the target cell 302.

The terminal device 101 may receive 310 the PDCCH order 308 triggering a CFRA PRACH transmission and also receive 310 the plurality of CFRA resources together with associated SSB indices or CSI-RS indices.

The terminal device 101 may start a validity timer that indicates how long the plurality of CFRA resources are valid. The validity timer may be started upon reception of the plurality of CFRA resources or upon transmission of a CFRA PRACH.

A timer configuration for the validity timer may be included in the resource configuration. Alternatively, the timer configuration may be indicated by the serving cell 301 or determined by the terminal device 101.

The terminal device 101 may transmit 315 a first CFRA PRACH 318 on a first CFRA resource of the plurality of CFRA resources. The target cell 302 may receive 320 the first CFRA PRACH 318 on the first CFRA resource. The first CFRA PRACH may be an initial CFRA PRACH transmission or a current CFRA PRACH transmission.

Based on the transmission of the first CFRAPRACH 318, the terminal device 101 may consider an SSB index or CSI-RS index associated to the first CFRA resource as the current QCL source for monitoring a PDCCH or PDSCH from the target cell 302 after a potential cell switch command from the serving cell 301.

The terminal device 101 may measure 325 and evaluate the SSB indices or CSI-RS indices associated with the plurality of CFRA resources, e.g., based on SSB measurement. The terminal device 101 may determine 328 that a quality of an SSB index or CSI-RS index associated with the first CFRA resource is not good enough, e.g., lower than a predetermined value. The terminal device 101 may select a second CFRA resource of the plurality of CFRA resources (or additional CFRA resources) if it has a quality better than the SSB index or CSI-RS index associated with the first CFRA resource, or in general the quality metric is above a certain threshold.

If there is none resource having a quality above the certain threshold or a quality higher than the first CFRA resource, the terminal device 101 may continue the steps 325 and 328 until the validity timer expires or the terminal device 101 may stop the procedure of transmitting CFRA PRACHs for beam maintenance. In some embodiments, the terminal device 101 may transmit, to the serving cell 301 an indication of a failure in beam maintenance in the target cell 302.

If the terminal device 101 selects 330 a second CFRA resource for a second transmission of CFRA PRACH, the terminal device 101 may transmit 335 a second CFRA PRACH 338 on the second CFRA resource to the target cell 302. The terminal device 101 may transmit a corresponding CFRA preamble on a certain RO to the target cell 302.

The terminal device 101 may further start a wait timer upon the transmission of the second CFRA PRACH transmission. The wait timer may indicate when the new SSB index or CSI-RS index (associated to the CFRA resource, e.g., the transmitted CFRA preamble) can be used as the QCL source for the monitoring of a PDCCH or PDSCH from the target cell 302. The wait timer may indicate a longest time waiting for TA after transmitting of CFRAPRACH.

The serving cell 301 may transmit 345 a cell switch command 348 to the terminal device 101. The cell switch command 348 may indicate the terminal device 101 a switch or handover from the serving cell 301 to the target cell 302. The cell switch command may be signaled in a DCI on a PDCCH. The terminal device 101 may receive 360 the cell switch command 348 and switch to the target cell 302.

After the wait timer expires, the terminal device 101 may start to monitor 355 a PDCCH from the target cell 302 according to the QCL assumption provided by the new SSB index or CSI-RS index associated with the second CFRA resource.

For example, the target cell 302 may transmit 360 a PDCCH 365 with a QCL assumption based on the SSB index or CSI-RS index associated with the second CFRA resource. The terminal device 101 may receive 370 the PDCCH 365 using a beam pair link established based on the SSB index or CSI-RS index associated with the second CFRA resource.

In the process 200 or 300, a plurality of CFRA resources are configured for a CFRA process and the terminal device has a possibility to select another beam for subsequent transmission/reception before reception of a cell switch or handover command. Particularly, a beam maintenance and TA maintain between the terminal device and the target network device may be kept based on the plurality of SSB index or CSI-RS index associated with the transmitted CFRA PRACH(s) before a cell switch command, and without dedicated scheduling of the DCI containing a PDCCH order triggering a CFRA PRACH.

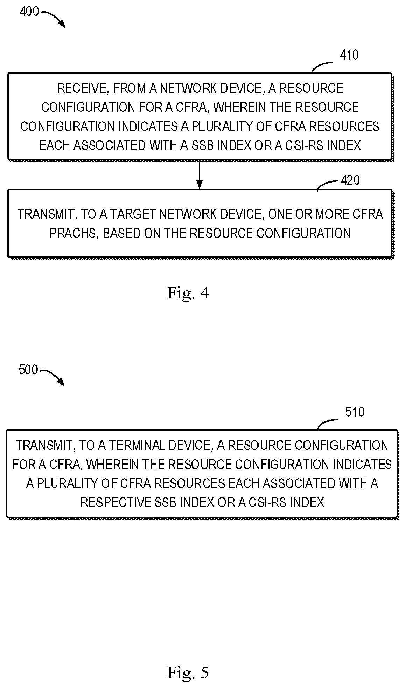

Reference is now made to Fig. 4, which shows an example flowchart of a method 400 implemented at a terminal device according to some embodiments of the present disclosure. For the purpose of discussion, the method 400 will be described from the perspective of the terminal device 101 with reference to Fig. 1.

At block 410, the terminal device 101 receives, from the network device 110, a resource configuration for a contention-free random access, CFRA, wherein the resource configuration indicates a plurality of CFRA resources each associated with a respective synchronization signal and physical broadcast channel block, SSB, index or channel state information reference signal, CSI-RS, index, and the plurality of CFRA resources are applicable for timing advance, TA, acquiring in a target network device. At block 420, the terminal device 101 transmits, to the target network device, one or more CFRA physical random access channels, PRACHs, based on the resource configuration. The plurality of CFRA resources may be used before a handover/cell switch command is received from the serving cell 201, or a second CFRA resource in the plurality of CFRA resources may be used for TA acquiring after a timer expiry of a first CFRA resource in the plurality of CFRA resources has been send. The transmission of CFRA PRACH in the target cell is for TA acquiring purpose. More than one CFRA resource is configured considering the SSB associated with the CFRA resource may change during the TA acquiring process.

In some embodiments, the plurality of CFRA resources may be valid before one of: reception of a cell switch command, or expiry of a first timer for a valid period of the plurality of CFRA resources.

In some embodiments, the resource configuration may be received in a physical downlink control channel, PDCCH, order triggering a CFRA process.

In some embodiments, the terminal device 101 may further perform, based on determining that a first quality of an SSB index or a CSI-RS index associated with a first CFRA resource of the plurality of CFRA resources is lower than a first predetermined value, a selection of a second CFRA resource for a transmission of a second CFRA PRACH from the plurality of CFRA resources, wherein the first CFRA resource is for a transmission of a current CFRA PRACH.

In some embodiments, the plurality of CFRA resources may include the first CFRA resource for a transmission of a CFRA PRACH and one or more additional CFRA resources.

In some embodiments, an SSB index or a CSI-RS index associated with the second CFRA resource may have better quality than the first quality, or a quality above a second predetermined value.

In some embodiments, the terminal device 101 may further measure qualities of the SSB indices or CSI-RS indices associated with the plurality of CFRA resources, wherein the selection of the second CFRA resource is based on the measuring.

In some embodiments, the terminal device 101 may further transmit an indication of a failure in beam maintenance to the network device based on determining that the SSB indices or CSI-RS indices associated with the one or more additional CFRA resources have qualities lower than the first predetermined value or lower than the first quality.

In some embodiments, the terminal device 101 may further start the first timer based on a transmission of a CFRA PRACH or reception of the plurality of CRFA resources.

In some embodiments, the terminal device 101 may further monitor, with an SSB index or a CSI-RS index associated with the second CFRA resource, a PDCCH or a physical downlink shared channel, PDSCH, from a target cell after a predefined time period following the transmission of the second CRFA PRACH.

In some embodiments, the terminal device 101 may further start a second timer upon the transmission of the second CFRA PRACH, wherein the second timer is used for timing the predefined time period.

Fig. 5 shows an example flowchart of a method 500 implemented at a network device in accordance with some embodiments of the present disclosure. For the purpose of discussion, the method 500 will be described from the perspective of the network device 110 with reference to Fig. 1.

As illustrated in Fig. 5, at block 510, the network device 110 transmits, to the terminal device 101, a resource configuration for a contention-free random access, CFRA, wherein the resource configuration indicates a plurality of CFRA resources each associated with a respective synchronization signal and physical broadcast channel block, SSB, index or channel state information reference signal, CSI-RS, index, and the plurality of CFRA resources are applicable for timing advance, TA, acquiring in a target network device.

In some embodiments, the resource configuration may be transmitted in a physical downlink control channel, PDCCH, order triggering a CFRA process.

In some embodiments, the plurality of CFRA resources may include a first CFRA resource for a transmission of a CFRA PRACH and one or more additional CFRA resources.

In some embodiments, the network device 110 may further receive, from the terminal device, an indication of a failure in beam maintenance.

In some embodiments, the network device 110 may further transmit, to the terminal device, a PDCCH or a physical downlink shared channel, PDSCH with a quasi co-location, QCL, assumption associated with an SSB index or a CSI-RS index associated with a CFRA resource of the plurality of resources.

In some embodiments, an apparatus capable of performing any of the method 400 (for example, the terminal device 101) may comprise means for performing the respective steps of the method 400. The means may be implemented in any suitable form. For example, the means may be implemented in a circuitry or software module.

In some embodiments, the apparatus comprises: means for receiving, from a network device, a resource configuration for a contention-free random access, CFRA, wherein the resource configuration indicates a plurality of CFRA resources each associated with a respective synchronization signal and physical broadcast channel block, SSB, index or channel state information reference signal, CSI-RS, index, and the plurality of CFRA resources are applicable for timing advance, TA, acquiring in a target network device; and means for transmitting, to the target network device, one or more CFRA physical random access channels, PRACHs, based on the resource configuration. The plurality of CFRA resources may be used before a handover/cell switch command is received from the serving cell 201, or a second CFRA resource in the plurality of CFRA resources may be used for TA acquiring after a timer expiry of a first CFRA resource in the plurality of CFRA resources has been send. The transmission of CFRA PRACH in the target cell is for TA acquiring purpose. More than one CFRA resource is configured considering the SSB associated with the CFRA resource may change during the TA acquiring process.

In some embodiments, the plurality of CFRA resources may be valid before one of: reception of a cell switch command, or expiry of a first timer for a valid period of the plurality of CFRA resources.

In some embodiments, the resource configuration may be received in a physical downlink control channel, PDCCH, order triggering a CFRA process.

In some embodiments, the apparatus may further comprise means for: performing, based on determining that a first quality of an SSB index or a CSI-RS index associated with a first CFRA resource of the plurality of CFRA resources is lower than a first predetermined value, a selection of a second CFRA resource for a transmission of a second CFRA PRACH from the plurality of CFRA resources, wherein the first CFRA resource is for a transmission of a current CFRA PRACH.

In some embodiments, the plurality of CFRA resources may include the first CFRA resource for a transmission of a CFRA PRACH and one or more additional CFRA resources.

In some embodiments, an SSB index or a CSI-RS index associated with the second CFRA resource may have better quality than the first quality, or a quality above a second predetermined value.

In some embodiments, the apparatus may further comprise means for: measuring qualities of the SSB indices or CSI-RS indices associated with the plurality of CFRA resources, wherein the selection of the second CFRA resource is based on the measuring.

In some embodiments, the apparatus may further comprise means for: transmitting an indication of a failure in beam maintenance to the network device based on determining that the SSB indices or CSI-RS indices associated with the one or more additional CFRA resources have qualities lower than the first predetermined value or lower than the first quality.

In some embodiments, the apparatus may further comprise means for: starting the first timer based on a transmission of a CFRA PRACH or reception of the plurality of CRFA resources.

In some embodiments, the apparatus may further comprise means for: monitoring, with an SSB index or a CSI-RS index associated with the second CFRA resource, a PDCCH or a physical downlink shared channel, PDSCH, from a target cell after a predefined time period following the transmission of the second CRFA PRACH.

In some embodiments, the apparatus may further comprise means for: starting a second timer upon the transmission of the second CFRA PRACH, wherein the second timer is used for timing the predefined time period.

In some embodiments, an apparatus capable of performing any of the method 500 (for example, the network device 110) may comprise means for performing the respective steps of the method 500. The means may be implemented in any suitable form. For example, the means may be implemented in a circuitry or software module.

In some embodiments, the apparatus comprises: means for transmitting, to a terminal device, a resource configuration for a contention-free random access, CFRA, wherein the resource configuration indicates a plurality of CFRA resources each associated with a respective synchronization signal and physical broadcast channel block, SSB, index or channel state information reference signal, CSI-RS, index, and the plurality of CFRA resources are applicable for timing advance, TA, acquiring in a target network device.

In some embodiments, the resource configuration may be transmitted in a physical downlink control channel, PDCCH, order triggering a CFRA process.

In some embodiments, the plurality of CFRA resources may include a first CFRA resource for a transmission of a CFRA PRACH and one or more additional CFRA resources.

In some embodiments, the apparatus may further comprise means for: receiving, from the terminal device, an indication of a failure in beam maintenance.

In some embodiments, the apparatus may further comprise means for: transmitting, to the terminal device, a PDCCH or a physical downlink shared channel, PDSCH with a quasi co-location, QCL, assumption associated with an SSB index or a CSI-RS index associated with a CFRA resource of the plurality of CFRA resources.

In some embodiments, the apparatus further comprises means for performing other steps in some embodiments of the method 500. In some embodiments, the means comprises at least one processor; and at least one memory including computer program code, the at least one memory and computer program code configured to, with the at least one processor, cause the performance of the apparatus.

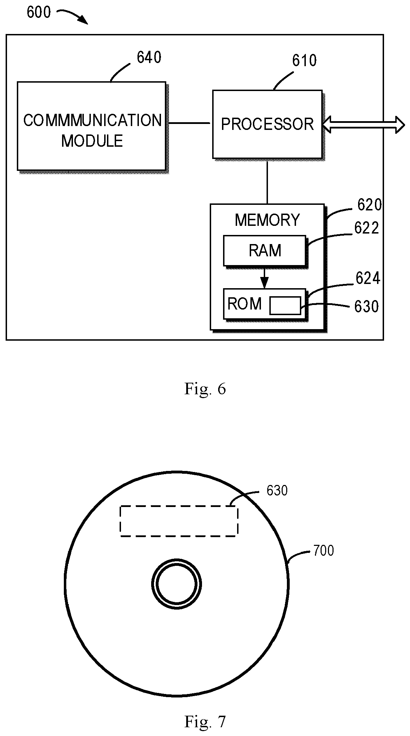

FIG. 6 is a simplified block diagram of a device 600 that is suitable for implementing embodiments of the present disclosure. The device 600 may be provided to implement the communication device, for example the terminal device 101, the network device 110 as shown in Fig. 1. As shown, the device 600 includes one or more processors 610, optionally one or more memories 620 coupled to the processor 610, and one or more communication modules 640 coupled to the processor 610.

The communication module 640 is for bidirectional communications. The communication module 640 may have at least one antenna to facilitate communication. The communication interface may represent any interface that is necessary for communication with other network elements.

The communication module 640 may include for example one or more transceivers. The one or more transceivers may be coupled with one or more antennas, to wirelessly transmit and receive communication signals. The one or more transceivers allow the communication device to communicate with other devices that may be wired and/or wireless. The transceiver may support one or more radio technologies. For example, the one or more transceivers may include a cellular subsystem, a WLAN subsystem, and/or a Bluetooth^{™} subsystem. In some examples, the one or more transceivers may include processors, controllers, radios, sockets, plugs, buffers, and like circuits/devices used for connecting to and communication on networks.

The processor 610 may be of any type suitable to the local technical network and may include one or more of the following: general purpose computers, special purpose computers, microprocessors, digital signal processors (DSPs) and processors based on multicore processor architecture, as non-limiting examples. The device 600 may have multiple processors, such as an application specific integrated circuit chip that is slaved in time to a clock which synchronizes the main processor.

The memory 620 may include one or more non-volatile memories and one or more volatile memories. Examples of the non-volatile memories include, but are not limited to, a read only memory (ROM) 624, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 622 and other volatile memories that will not last in the power-down duration.

A computer program 630 includes computer executable instructions that may be executed by the associated processor 610. The program 630 may be stored in the ROM 624. The processor 610 may perform any suitable actions and processing by loading the program 630 into the RAM 622.

The embodiments of the present disclosure may be implemented by means of the program 630 so that the device 600 may perform any process of the disclosure as discussed with reference to Figs. 4-5. The embodiments of the present disclosure may also be implemented by hardware or by a combination of software and hardware.

In some embodiments, the program 630 may be tangibly contained in a computer readable medium which may be included in the device 600 (such as in the memory 620) or other storage devices that are accessible by the device 600. The device 600 may load the program 630 from the computer readable medium to the RAM 622 for execution. The computer readable medium may include any types of tangible non-volatile storage, such as ROM, EPROM, a flash memory, a hard disk, CD, DVD, and the like. Fig. 7 shows an example of the computer readable medium 700 in form of CD or DVD. The computer readable medium has the program 630 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method 400 or 500 as described above with reference to Figs. 4-5. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A terminal device, comprising:
means for receiving, from a network device, a resource configuration for a contention-free random access, CFRA, wherein the resource configuration indicates a plurality of CFRA resources each associated with a respective synchronization signal and physical broadcast channel block, SSB, index or channel state information reference signal, CSI-RS, index, and the plurality of CFRA resources are applicable for timing advance, TA, acquiring in a target network device; and
means for transmitting, to the target network device, one or more CFRA physical random access channels, PRACHs, based on the resource configuration.

2. The terminal device of claim 1, wherein the plurality of CFRA resources are valid before one of:
reception of a cell switch command, or
expiry of a first timer for a valid period of the plurality of CFRA resources.

3. The terminal device of claim 1 or 2, wherein the resource configuration is received in a physical downlink control channel, PDCCH, order triggering a CFRA process.

4. The terminal device of any of claims 1 to 3, wherein the terminal device further comprising:
means for performing, based on determining that a first quality of an SSB index or a CSI-RS index associated with a first CFRA resource of the plurality of CFRA resources is lower than a first predetermined value, a selection of a second CFRA resource for a transmission of a second CFRA PRACH from the plurality of CFRA resources, wherein the first CFRA resource is for a transmission of a current CFRA PRACH.

5. The terminal device of claim 4, wherein the plurality of CFRA resources include the first CFRA resource for a transmission of a CFRA PRACH and one or more additional CFRA resources.

6. The terminal device of claim 4 or 5, wherein an SSB index or a CSI-RS index associated with the second CFRA resource has better quality than the first quality, or a quality above a second predetermined value.

7. The terminal device of any of claims 4 to 6, wherein the terminal device further comprising:
means for measuring qualities of the SSB indices or CSI-RS indices associated with the plurality of CFRA resources, wherein the selection of the second CFRA resource is based on the measuring.

8. The terminal device of claim 5, wherein the terminal device further comprising:
means for transmitting an indication of a failure in beam maintenance to the network device based on determining that the SSB indices or CSI-RS indices associated with the one or more additional CFRA resources have qualities lower than the first predetermined value or lower than the first quality.

9. The terminal device of any of claims 2 to 8, wherein the terminal device further comprising:
means for starting the first timer based on a transmission of a CFRA PRACH or reception of the plurality of CRFA resources.

10. The terminal device of any of claims 4 to 9, wherein the terminal device further comprising:
means for monitoring, with an SSB index or a CSI-RS index associated with the second CFRA resource, a PDCCH or a physical downlink shared channel, PDSCH, from a target cell after a predefined time period following the transmission of the second CRFA PRACH.

11. The terminal device of claim 10, wherein the terminal device further comprising:
means for starting a second timer upon the transmission of the second CFRAPRACH, wherein the second timer is used for timing the predefined time period.

12. A network device, comprising:
means for transmitting, to a terminal device, a resource configuration for a contention-free random access, CFRA, wherein the resource configuration indicates a plurality of CFRA resources each associated with a respective synchronization signal and physical broadcast channel block, SSB, index or channel state information reference signal, CSI-RS, index, and the plurality of CFRA resources are applicable for timing advance, TA, acquiring in a target network device, wherein the resource configuration is transmitted in a physical downlink control channel, PDCCH, order triggering a CFRA process.

13. The network device of claim 12, wherein the plurality of CFRA resources include a first CFRA resource for a transmission of a CFRA PRACH and one or more additional CFRA resources.

14. The network device of any of claims 12 or 13, wherein the network device further comprising:
means for receiving, from the terminal device, an indication of a failure in beam maintenance.

15. The network device of any of claims 12 to 14, wherein the network device further comprising:
means for transmitting, to the terminal device, a PDCCH or a physical downlink shared channel, PDSCH with a quasi co-location, QCL, assumption associated with as an SSB index or a CSI-RS index associated with a CFRA resource of the plurality of CFRA resources.
